# EUROPEAN PATENT APPLICATION

(11) **EP 0 754 402 A1**
(43) Date of publication of application: **22.01.1997**
(21) Application number: 95912409.0
(22) Date of filing: 15.03.1995
(51) Int. Cl.: A01D 34/70

(54) **CATCHER BOX FOR LAWN MOWER**

(30) Priority: 15.03.1994 JP 43700/94; 15.03.1994 JP 43702/94; 20.12.1994 JP 316373/94
(71) Applicant: YANMAR AGRICULTURAL EQUIPMENT CO., LTD., Osaka-fu 530 (JP); SEIREI INDUSTRY CO., LTD., Okayama-ken 702 (JP)
(72) Inventor: KOBAYASHI, Tomoo, Yanmar Agri. Equipment Co., Ltd, Osaka-shi, Osaka-fu 530 (JP); HIRATA, Shuhei, Yanmar Agri. Equipment Co., Ltd., Osaka-shi, Osaka-fu 530 (JP); FUJIMOTO, Kenichi, Yanmar Agri. Equipm. Co., Ltd., Osaka-shi, Osaka-fu 530 (JP); SUHARA, Yasuyuki, Yanmar Agri.Equipment Co., Ltd., Osaka-shi, Osaka-fu 530 (JP); BEPPU, Tatsuya, Yanmar Agri. Equipment Co., Ltd., Osaka-shi, Osaka-fu 530 (JP); HASHIMOTO, Yasuhiro, Yanmar Agri.Equipm. Co., Ltd., Osaka-shi, Osaka-fu 530 (JP); HIROSHIGE, Kouichi, Seirei Industry Co., Ltd., Okayama-shi, Okayama-ken 702 (JP)
(74) Representative: Gossel, Hans K., Dipl.-Ing.
(86) International application number: JP9500424
(87) International publication number: WO9524825

(57) **Abstract**

A catcher box(30) for storing grass cut by a lawn mower(20) mounted on a vehicle(10) and carried through a thrower(23), comprising:
a stationary part(35) attached to the vehicle(10) and a cover(37) pivotally attached to the stationary part(35) so as to open and close, a locking mechanism adapted for locking the stationary part(35) and the cover(37), the locking mechanism provided with a lever(41) for opening or closing the cover(37) in two steps of operations including to release or function the locking mechanism and to open or close the cover(37).

## Description

### TECHNICAL FIELD

The present invention relates generally to an improved catcher box for storing grass cut by a lawn mower mounted on a lower center part of a tractor.

### BACKGROUND ART

A catcher box for storing grass cut by a lawn mower mounted on a lower center part of a tractor (a vehicle) is well known. However, the conventional catcher box had the following various drawbacks.

First, in the conventional catcher box, in order to discharge the cut grass from the catcher box, two steps of operations, that were to release locking means for locking a cover of the catcher box, and to open the cover by handling a lever, were needed. Therefore, the operations were troublesome for the operator. The reason for requiring two separate operations was because, if they were to be done in one operation, there would be an inconvenience that a link mechanism for opening and closing the cover would be complex.

Further more, the conventional catcher box was provided with a sensor for detecting whether the catcher box was fully occupied by the cut grass stored. However, the sensor sometimes did not properly function because the way the cut grass was accumulated inside the catcher box differed depending on different kinds of grasses and a difference in weight among the grasses.

Further, the conventional catcher box was constructed so that the grass cut by the lawn mower was carried to the catcher box through a thrower by wind. However, since an inlet of the catcher box for the cut grass from the thrower was not properly located, there was a problem that only an amount of cut grass that was less than the capacity of the catcher box could be stored therein.

In addition, since the cut grass was carried from the thrower to the catcher box by wind, an exhaust port for discharging entrained air was provided. However, there was a problem that the cut grass could not be charged into the catcher box when the exhaust port was clogged.

Moreover, such exhaust port was constructed with a few fins such as in a louver disposed on an upper part of the rear wall of the catcher box which were adapted for exhausting the wind downwardly. However, with such a construction, when outside wind blew from the rear side, the wind exhausted through the fins spread out and blew forward along with dust. It caused a problem in that the dust fell over the operator. Especially, the working environment on a windy day was poor.

Further more, it is known to provide a space underneath the catcher box for allowing the cut grass to fall therefrom when the cut grass stored therein was taken out by opening the cover. However, since the bottom wall of the conventional catcher box was positioned either horizontally or slightly slanted, the cut grass within the catcher box could not easily fall due to the friction existing between the cut grass and the bottom wall.

Further more, a connecting hose was provided between the thrower and the catcher box. However, the connected portions between the thrower and the catcher box were often clogged with the cut grass and it could cause a problem in grass cutting operations.

It is, therefore, an object of the present invention to provide an improved catcher box which overcomes the above-mentioned several drawbacks of the conventional catcher box.

### DISCLOSURE OF THE INVENTION

The above and other objects of the present invention can be accomplished by a catcher box for storing grass cut by a lawn mower mounted on a vehicle and carried through a thrower, comprising a stationary part attached to the vehicle and a cover pivotally attached to said stationary part so as to open and close, a locking mechanism adapted for locking said stationary part and said cover, said locking mechanism provided with a lever for opening or closing said cover in two steps of operations including to release or function said locking mechanism and to open or close said cover.

In a preferred aspect of the present invention, said catcher box has an inlet port for accepting the cut grass carried from said thrower, and said catcher box further comprises a sensor for detecting whether an amount of the cut grass fed into said catcher box through said inlet port has reached a predetermined amount, and said sensor being mounted on said catcher box at a location right below said inlet port and be able to adjust the vertical position thereof.

In another aspect of the present invention, a catcher box for storing grass cut by a lawn mower mounted on a vehicle and carried through a thrower, comprising said catcher box having substantially a box shape having a front wall and a rear wall, and said front wall is provided with an inlet port for accepting the cut glass carried from the thrower located at an upper part thereof such that the cut grass is blown in a diagonal direction within the catcher box.

In a still further preferred aspect of the present invention, said inlet port is positioned downwardly a predetermined distance from the highest portion of said catcher box, and said catcher box further comprises an exhaust port for exhausting entrained air from said thrower provided in said rear wall of said catcher box.

In a preferred aspect of the present invention, a catcher box further comprises a stationary part attached to the vehicle and a cover pivotally attached to said stationary part so as to open and close, said cover having a first bottom wall which is inclined at a predetermined angle with respect to the horizontal plane.

In a further preferred aspect of the present invention, said catcher box defines a dividing plane between said stationary part and said cover, said stationary part having a second bottom wall, and an angle between said second bottom wall of said stationary part and said dividing plane is substantially equal to an angle between said dividing plane and said first bottom wall of said cover.

In another aspect of the present invention, a catcher box for storing grass cut by a lawn mower mounted on a vehicle and carried through a thrower, comprising an outlet provided in said thrower, an inlet port provided in said catcher box, a connecting hose provided between said outlet of the thrower and said inlet port of said catcher box and a fitting whose diameter gradually increases, and said outlet of the thrower and said connecting hose are releasably connected to each other with said fitting.

In a still further preferred aspect of the present invention, said fitting is provided with locking means having a spring and a pull ring.

In another aspect of the present invention, a catcher box for storing grass cut by a lawn mower mounted on a vehicle and carried through a thrower, comprising an exhaust duct provided on a rear wall of said catcher box for exhausting entrained air from the thrower, said exhaust duct being rearwardly enlarged from said rear wall of said catcher box and having an exhaust port located at a lower portion of said exhaust duct, and a filter disposed on said rear wall of said catcher box within said exhaust duct.

In a still further preferred aspect of the present invention, said catcher box has a bottom wall and said exhaust duct is located adjacent to a rear end of said bottom wall of said catcher box.

As described above, the present invention is constructed to open and close the cover by a lever in two steps of operations. When the cut grass is to be discharged from the catcher box, the locking means is released from its locked state by carrying out the first opening and closing operation in order to open the cover. Therefore, a force necessary to apply to the lever and the load applied to the link mechanism during its operation can be decreased. Further, to close the cover, once the lever is pressed down, it closes by itself due to its own weight. It enables to decrease the force necessary to apply to the lever for its operation. Further more, by pulling down the lever, the locking means engages with the closed cover, and whereby the cover is assured to be locked. In addition, when the lever is in the pulled down position, the cover is closed and the lawn mower is redy to be operated. In this case, the cover does not open by a miss operation of the lever since the weight of the lever itself contributes to lock the cover. Further more, since the lever is located at a low position during the lawn cutting operation, it does not disturb the operation of the operator.

By providing a sensor right below the inlet port so as to be able to adjust the vertical position thereof, it enables to change the position thereof depending on the kinds of grasses and the growth of the grass, and whereby the cut grass can be stored evenly within the catcher box. Further, the maximum stored amount of the cut grass can be detected since the location to be filled with the cut grass within the catcher box at last is the location right below the sensor, the maximum stored amount of the cut grass can be detected.

Further, since the present invention is constructed so that the cut grass is blown in a diagnal direction within the catcher box, the maximum amount of the cut grass stored can be detected.

Further more, the inlet port is positioned downwardly a predetermined distance from the highest portion of the catcher box, and the catcher box further comprises an exhaust port for exhausting entrained air from the thrower provided in the rear wall of the catcher box. Therefore, clogging of the exhaust port is prevented.

In addition, a first bottom wall of the cover is inclined at a predetermined angle with respect to the horizontal plane. It enables the cut grass to fall easily when the cut grass is to be discharged. Therefore, the discharging operation can be efficiently carried out.

Further, the outlet of the thrower and the connecting hose are connected to each other with a fitting. Therefore, clogging of the cut grass at the connected part between the outlet of the thrower and the connecting hose can be minimized.

Further more, by releasably connecting the outlet of the thrower and the connecting hose to each other by a fitting, the thrower and the hose can be easily connected.

In addition, an exhaust duct is provided on a rear wall of the catcher box for exhausting entrained air from the thrower, and a filter is disposed on the rear wall of the catcher box within the exhaust duct.

Therefore, the entrained air is exhausted downwardly through the filter to below the rear wall. Thereby, the velocity of the entrained air is slowed down and is exhausted toward the ground without the cut grass being blown therewith. Even when the outside wind blows from the rear side of the vehicle during the grass cutting operation, the exhausted wind is not blown toward the operator, and whereby a present working environment can be maintained.

### BRIEF DESCRIPTION OF DRAWINGS

Figure 1 is a schematic diagram showing a tractor provided with a catcher box and a lawn mower according to the present invention.

Figure 2 is an enlarged side view showing a box opening and closing mechanism and a catcher box.

Figure 3 is an enlarged plan view showing a box opening and closing mechanism and a catcher box.

Figure 4 is a partial enlarged plan view of a catcher box.

Figure 5 is a view showing a part of a box opening and closing mechanism prior to a first opening and closing operation.

Figure 6 is a view showing a part of a box opening and closing mechanism at the time of completing a first opening and closing operation.

Figure 7 is a partial sectional view of a catcher box showing an attachment of a sensor.

Figure 8 is a perspective view illustrating a sensor and a bracket for attaching the sensor.

Figure 9 is a partial sectional view of a catcher box showing its exhaust port.

Figure 10 is an enlarged side view illustrating a connection between a thrower and a hose.

Figure 11 is a plan view showing a connection between a discharge port of a thrower and an enlarged fitting.

Figure 12 is a perspective view showing a stopper of a hose.

Figure 13 is a view showing a modified spring and a pull ring of a stopper of a hose.

Figure 14 is a partial sectional view showing a modified catcher box according to the present invention.

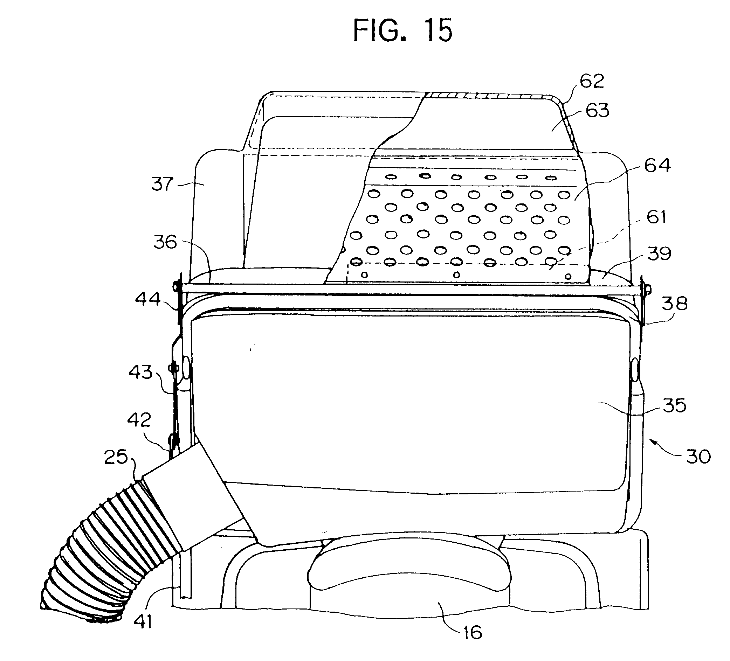

Figure 15 is a partial plan view of a catcher box shown in Figure 14.

### BEST MODE FOR CARRYING OUT THE INVENTION

Now, a preferred embodiment of the present invention will be explained with reference to the attached drawings.

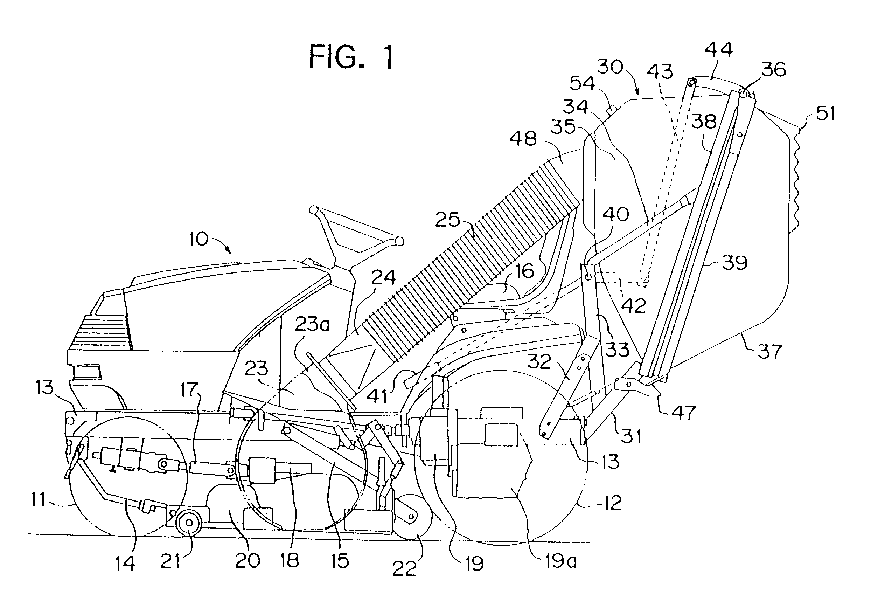

As shown in Figure 1, a tractor 10 (a vehicle) is supported by a pair of front wheels 11 and a pair of rear wheels 12. A lawn mower 20 for cutting grass is provided between the front wheels 11 and the rear wheels 12. A front part of the lawn mower 20 is hanged from a frame 13 of the tractor 10 by a front hanging link 14. A rear part of the lawn mower 20 is hanged from the frame 13 of the tractor 10 by a rear hanging link 15 via a power cylinder so as to move up and down. It enables to adjust the height of the lawn mower 20 to cut the grass at a desired height.

As shown in Figure 1, a catcher box 30 for storing grass cut by the lawn mower 20 is attached to the frame 13 at a rear part of the tractor 10 by supporting stays 31, 32, 33 and 34. The lawn mower 20 is a rotational type and has a plurality of rotating blades (not shown). A seat 16 for an operator is located above the rear wheels 12. A thrower 23 for moving the grass cut by the lawn mower 20 is disposed on the right side of the seat 16 when viewed from the rear side of the vehicle.

The thrower 23 is connected with the lawn mower 20. An exhaust port 23a of the thrower 23 is connected with a hose at one end by an enlarged fitting 24 which shall be explained in detail herein below. The hose 25 is connected with an inlet port 48 of the catcher box 30 at the other end. Having such composition, the grass cut by the lawn mower 20 is fed into the catcher box 30 through the thrower 23, the hose 25, and the inlet port 48 by entrained air. Since the lawn mower 20 and the thrower 23 themselves are well known devices in the field of agricultural machines, detailed explanations shall be omitted.

An engine (not shown) is disposed at a front part of the tractor 10. The power generated by the engine is transmitted to an input box 18 disposed above the lawn mower 20 via a joint axis 17. The lawn mower 20 and the thrower 23 are driven by the power transmitted to the input box 18. Further more, the power generated by the engine is transmitted to a HST type transmission 19 disposed between the left and right rear wheels 12 and the rotation continuously varied is transmitted to a mission case 19a to drive the rear wheels 12.

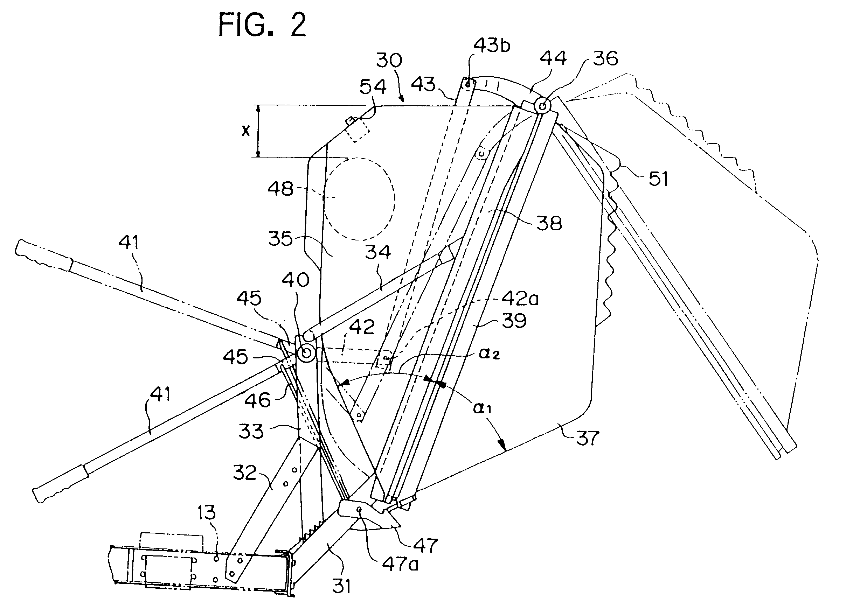

As illustrated in Figure 2, the catcher box 30 for storing the cut grass is provided generally with a stationary part 35 affixed to the frame 13 by supporting stays 31, 32, 33, and 34 and a cover 37 pivotally attached to the stationary part 35 at a pivot axis 36 provided at the top thereof so that it can be opened and closed. The catcher box 30 has substantially a box shape. A dividing plane between the stationary part 35 and the cover 37 as viewed from the side forms substantially a diagonal line of the catcher box 30. A reinforcing frame 38 is attached to the stationary part 35 adjacent to the dividing plane and a reinforcing frame 39 is attached to the cover 37 adjacent to the dividing plane. By closing the cover 37, the reinforcing frames 38 and 39 are sealingly engaged to each other.

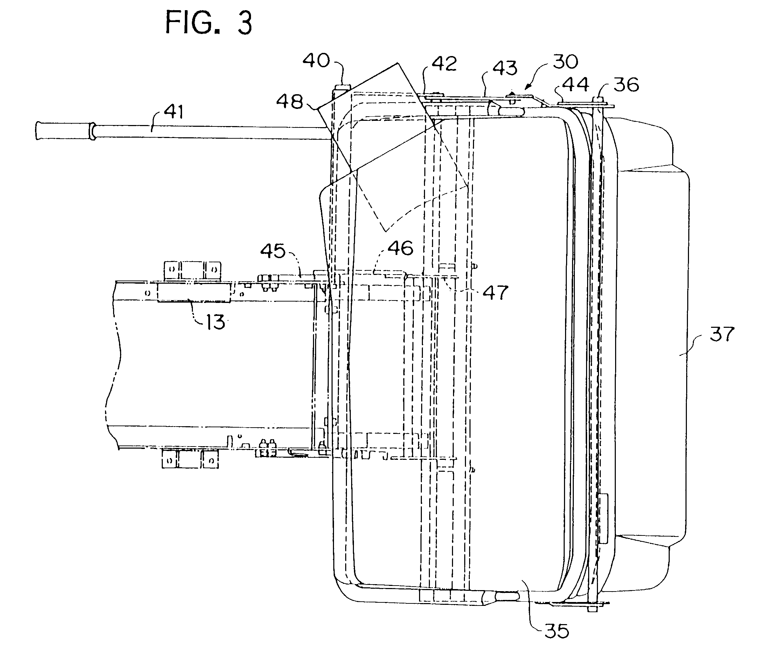

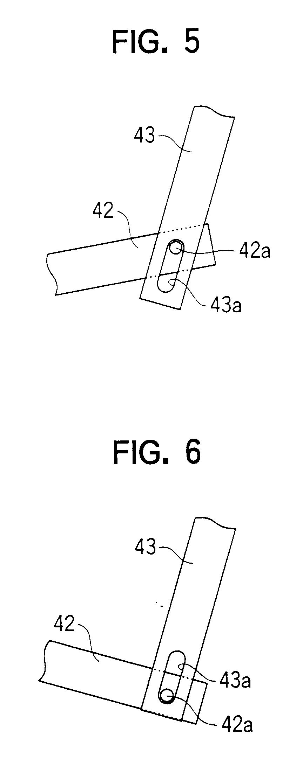

A pivot axis 40 is rotatably supported at an upper end of the supporting stay 33. A box opening and closing lever 41 for opening and closing the catcher box 30 is pivoted by the pivot axis 40 so as to be positioned at an appropriate location on the right side of the seat 16 when viewed from the rear side of the vehicle. A member 42 is attached to a location adjacent to the right end portion of the pivot axis 40 when viewed from the rear side of the vehicle and it extends rearwardly with respect to the tractor 10. A pin 42a is provided at an end of the member 42. As shown in Figures 5 and 6, a link member 43 having a slot 43a at its lower end is connected with the member 42 such that the slot 43a slidably engages with the pin 42a. An arm member 44 is pivotally connected with an upper end of the link member 43 by a pin 43b. It is fixed to the reinforcing frame 39 of the cover 37 at the other end. As shown in Figures 2 and 3, a pair of arm members 45 are fixedly provided substantially at the middle of the pivot axis 40 and link members 46 are pivotally connected to each of arm members 45. Locking means 47 is pivotally attached to an end of each link member 46 by a pin 47a, whereby an end of the locking means 47 locks the reinforcing frame 39 of the cover 37 when the cover 37 is closed. It prevents the the cover 37 from being opened.

Being constructed in such a manner, when an operator carries out a first opening and closing operation by pulling up the box opening and closing lever 41, the member 42 rotates about the pivot axis 40, and the pin 42a at the end of the member 42 slides until it abuts with the lower end of the slot 43a of the link member 43 as shown in Figure 6. At the same time, since the arm member 45 is also pulled, the locking means 47 is released from the locked state via the link members 46. In the first opening and closing operation, since the pin 42a of the member 42 slides within the slot 43a, no force is imposed on the link member 43. Therefore, the cover 37 is remained to be closed. Then, when the operator carries out a second opening and closing operation by pulling the box opening and closing lever 41 further up, the arm member 44 is rotated via the link member 43 in a counter clockwise direction as viewed in Figure 2. It causes the cover 37 to rotate about the pivot axis 36 in the counter clockwise direction, whereby the cover 37 is opened. The opening operation of the cover 37 is now completed. In Figure 2, the cover 37 and the box opening and closing lever 41 in a closed state are shown in solid lines and the cover 37 and the box opening and closing lever 41 in an opened state are shown in dotted lines.

By reverse operations of the opening operations, the cover 37 can be closed. Explaining in more detail, when the cover 37 is in an opened state, the box opening and closing lever 41 is located at the upper most position. First, the second opening and closing operation is carried out by pushing down the box opening and closing lever 41 at the upper most position. Then, since the pin 42 is engaged with the lower end of the slot 43a of the link member 43, the arm member 44 is rotated via the link member 43 in a clockwise direction as viewed in Figure 2. It causes the cover 37 to rotate about the pivot axis 36 in the clockwise direction due to its own weight, whereby the cover 37 is closed. Then, when the operator carries out the first opening and closing operation by pushing down the box opening and closing lever 41, the pin 42a slides upwardly within the slot 43a and the link member 46 is rotated via the locking means 47. The end of the locking means 47 locks the reinforcing frame 39 of the cover 37 to prevent the cover 37 from being opened.

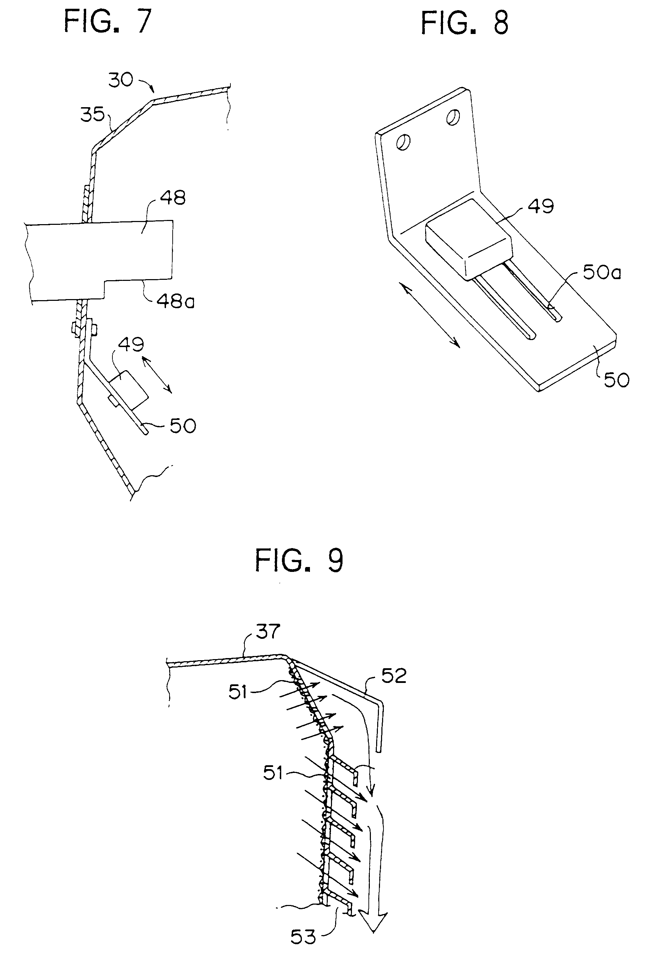

As illustrated in Figure 7, the catcher box 30 is provided with a sensor 49 below the inlet port 48. It is for detecting whether an amount of the cut grass has reached a predetermined amount. As shown in Figure 8, the sensor 49 is slidably mounted on a bracket 50 to allow upward and downward movement within a slot 50a. The bracket 50 is fixed to an inner surface of the catcher box 30 right below the cut out portion 48a provided at the lower part of the end of the inlet port 48, for example, by bolts. It allows the vertical position of the sensor 49 to be adjusted. By providing the sensor 49, it can be detected when the amount of cut grass within the catcher box 30 has reached the predetermined amount. Therefore, it can prevent the thrower 23 from being exerted by an excess force due to the cut grass filled within the hose 25 because of full occupation of the catcher box 30.

As shown in Figure 2, the inlet port 48 is located at an location where a distance between the upper end of the inlet port and the top wall of the catcher box 30 is equal to a distance "x". As previously mentioned, the sensor 49 is provided right below the inlet port 48. Therefore, it prevents the catcher box 30 from being filled with the cut grass above the location of the sensor 49. It assures to leave a space having a distance x in the upper region of the catcher box 30 so that the carrier air from the thrower 23 can blow through an exhaust port 51 to the outside of the catcher box 30. It shall be explained in more detail below. Preferably, the sensor 49 is connected with a buzzer 54. It is adapted to go off to give a warning to the operator, when the sensor 49 is ON.

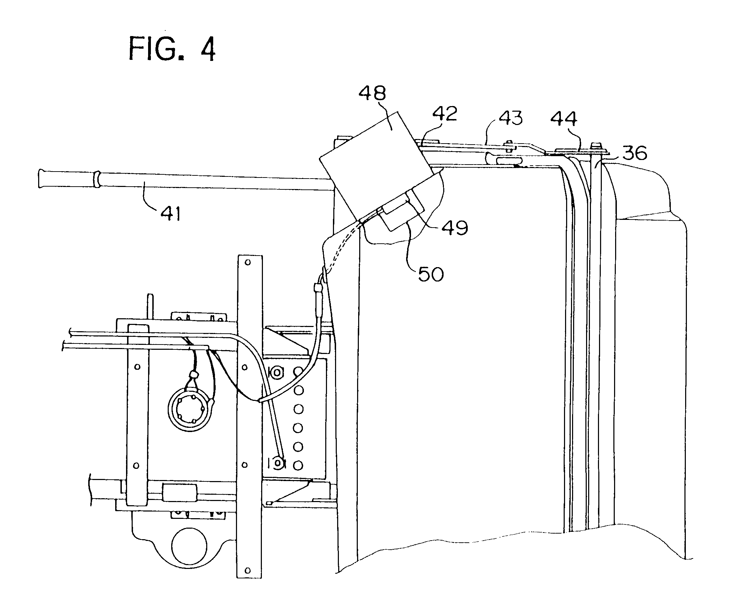

As shown in Figure 4, the inlet port 48 is located at a right upper corner of a front wall of the catcher box 30 so that the cut grass to be fed into is directed substantially in a diagonal direction of the catcher box 30. It enables to fill the catcher box 30 from the location diagonally opposite from the inlet port 48 and to fill the location in the vicinity of the sensor 49 at last.

As shown in Figure 2, in the catcher box 30 according to the present invention, an angle α 1 between the dividing plane and a bottom wall 37c of the cover 37 forms a predetermined angle with respect to a horizontal plane. Preferably, the angle α 1 is formed to be substantially equal to an angle α 2 between the dividing plane and the bottom wall of the stationary part 35. It facilitates the cut grass to be dropped from the catcher box 30 without intentionally imposing a vibration on the catcher box 30.

A plurality of the exhaust ports 51 are provided at the upper part of the rear wall 37b of the cover 37 of the catcher box 30. They serve as outlets for the entrained air which blows out of the thrower 23 and flows into the catcher box 30 through the hose 25. As shown in Figure 9, the exhaust ports 51 are covered with a guide cover 52 and guide members 53, to exhaust the entrained air downwardly without being exhausted directly toward the rear direction.

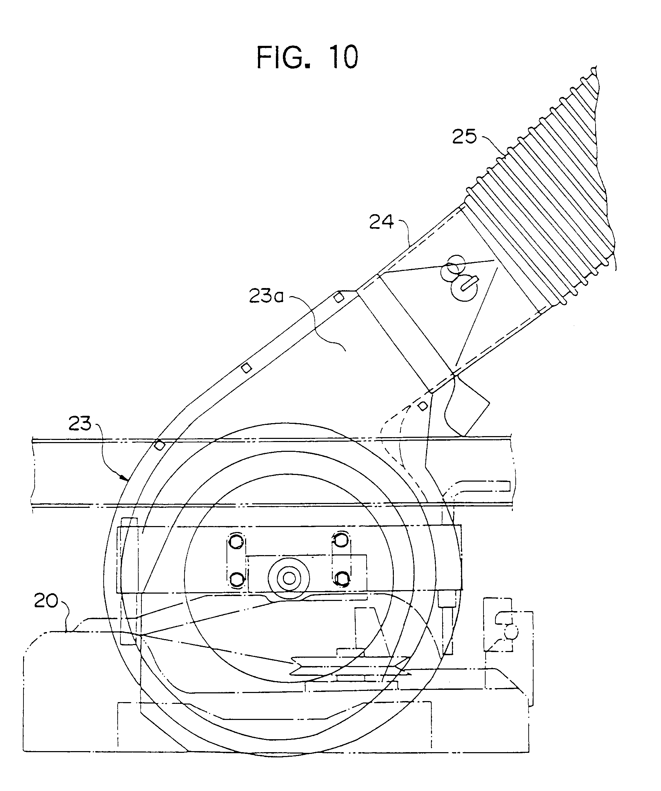

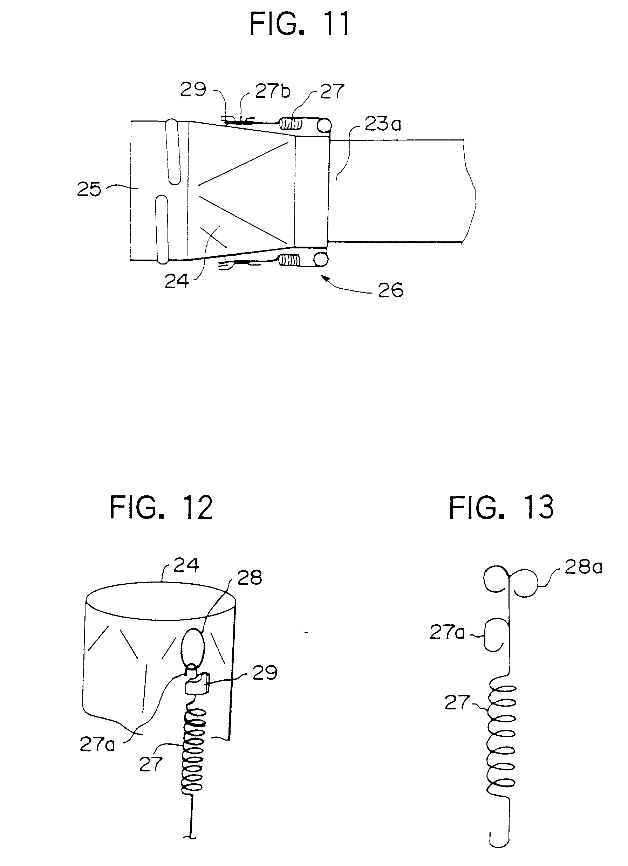

As can be seen in Figure 10, the hose 25 is connected with the exhaust port 23a of the thrower 23 via the enlarged fitting 24. The enlarged fitting 24 is fixedly attached to the hose 25 all the time. On the other hand, it is releasably connected with the exhaust port 23a by locking means 26. As shown in Figure 11, the locking means 26 is attached to the exhaust port 23a. It is comprised of a plurality of springs 27, each of which is provided with a hook 27a at its end, a pull ring 28 attached to the end of the hook 27a, and a locking pin 29 mounted on each enlarged fitting 24. It facilitates to release the hook 27a from the locking pin 29 or to hook the locking pin 29 to the hook 27a. As shown in Figure 13, the pull ring 28a can be a two-eye type.

The present invention has thus been shown and described with reference to specific embodiments. However, it should be noted that the present invention is in no way limited to the details of the described arrangements but changes and modifications may be made without departing from the scope of the appended claims.

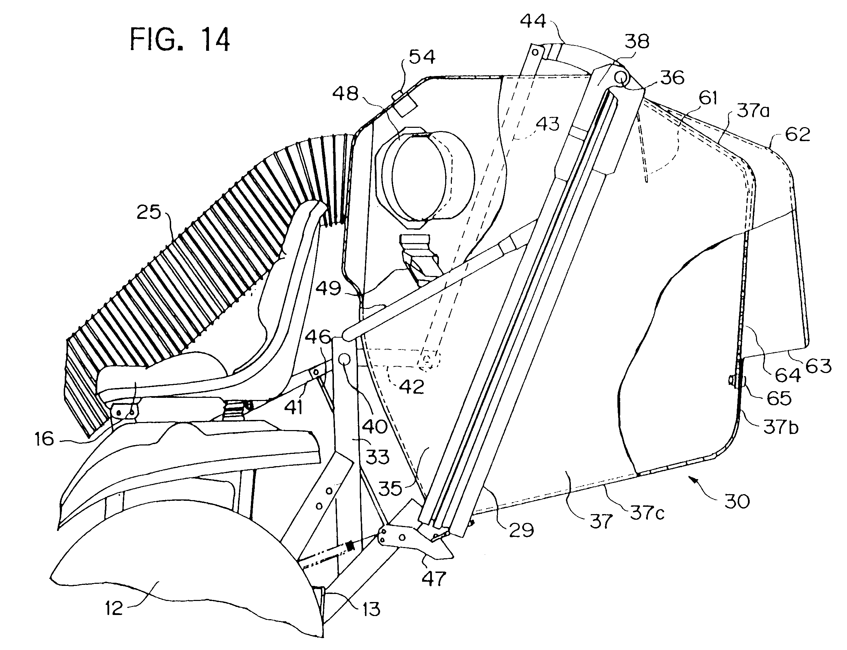

For example, in the above preferred embodiment, as explained in connection with Figure 9, the exhaust ports 51, and the guide cover 52 and the guide members 53 for covering the exhaust ports 51 are provided in the rear wall of the cover 37 of the catcher box 30. However, as shown in Figure 14, a guide plate 61 which extends obliquely and downwardly from the pivot axis 36 can be provided within the catcher box 30. It helps to guide the cut grass fed into the catcher box 30 through the inlet port 48 and the exhausted wind in a downward direction. Further, since they are directed to the guide plate 61 rather than being directed to a filter 64 stated below, clogging of the filter 64 can be avoided.

Further, as shown in Figure 14, an exhaust duct 62 can be provided in the rear wall 37b of the cover 37 of the catcher box 30. It may be shaped to be extended and gradually enlarged from the upper wall 37a of the cover 37 of the catcher box 30 toward a location adjacent to a rear end of the bottom wall 37c. An opening is formed in the rear wall 37b of the cover 37 opposite to the exhaust duct 62. The filter 64 formed out of, for example, a net and a punched metal plate, is fixed in order to cover the opening on the rear wall 37b of the cover 37 by bolts and nuts 65. It prevents the cut grass stored in the catcher box 30 from being discharged from the exhaust duct 62 while only the entrained air is exhausted therefrom. Further, since the entrained air is exhausted via the guide plate 61 and the filter 64, the velocity of the entrained air exhausted can be slowed down. Further more, since it flows along the bottom wall 37c of the cover 37, even if the outside wind blows from the rear side, the discharged objects do not fume.

### INDUSTRIAL APPLICABILITY

As described above, the catcher box according to the present invention is useful to efficiently cut the grass.

## Claims

1. A catcher box for storing grass cut by a lawn mower mounted on a vehicle and carried through a thrower, comprising:
a stationary part attached to the vehicle and a cover pivotally attached to said stationary part so as to open and close, a locking mechanism adapted for locking said stationary part and said cover, said locking mechanism provided with a lever for opening or closing said cover in two steps of operations including to release or function said locking mechanism and to open or close said cover.

2. A catcher box in accordance with Claim 1, wherein said catcher box has an inlet port for accepting the cut grass carried from said thrower, and
further comprising a sensor for detecting whether an amount of the cut grass fed into said catcher box through said inlet port has reached a predetermined amount, and said sensor being mounted on said catcher box at a location right below said inlet port and be able to adjust the vertical position thereof.

3. A catcher box for storing grass cut by a lawn mower mounted on a vehicle and carried through a thrower, comprising:
said catcher box having substantially a box shape having a front wall and a rear wall, and an inlet port for accepting the cut glass carried from the thrower located at an upper part of said front wall such that the cut grass is blown in a diagonal direction within the catcher box.

4. A catcher box in accordance with Claim 3, wherein said inlet port is positioned downwardly a predetermined distance from the highest portion of said catcher box, and
further comprising an exhaust port for exhausting entrained air from said thrower provided in said rear wall of said catcher box.

5. A catcher box in accordance with Claim 3, further comprising, a stationary part attached to the vehicle and a cover pivotally attached to said stationary part so as to open and close, said cover having a first bottom wall which is inclined at a predetermined angle with respect to the horizontal plane.

6. A catcher box in accordance with Claim 5, wherein said catcher box defines a dividing plane between said stationary part and said cover, said stationary part having a second bottom wall, and an angle between said second bottom wall of said stationary part and said dividing plane is substantially equal to an angle between said dividing plane and said first bottom wall of said cover.

7. A catcher box for storing grass cut by a lawn mower mounted on a vehicle and carried through a thrower, comprising:
an outlet provided in said thrower, an inlet port provided in said catcher box, a connecting hose provided between said outlet of the thrower and said inlet port of said catcher box and a fitting whose diameter gradually increases, and said outlet of the thrower and said connecting hose are releasably connected to each other with said fitting.

8. A catcher box in accordance with Claim 7, wherein said fitting is provided with locking means having a spring and a pull ring.

9. A catcher box for storing grass cut by a lawn mower mounted on a vehicle and carried through a thrower, comprising:
an exhaust duct provided on a rear wall of said catcher box for exhausting entrained air from the thrower, said exhaust duct being rearwardly enlarged from said rear wall of said catcher box and having an exhaust port located at a lower portion of said exhaust duct, and a filter disposed on said rear wall of said catcher box within said exhaust duct.

10. A catcher box in accordance with Claim 7, wherein said catcher box has a bottom wall and said exhaust duct is located adjacent to a rear end of said bottom wall of said catcher box.
